# EUROPÄISCHE PATENTSCHRIFT

(11) **EP 0 816 139 B1**
(45) Veröffentlichungstag und Bekanntmachung des Hinweises auf die Patenterteilung: **18.09.2002**
(21) Anmeldenummer: 97109000.6
(22) Anmeldetag: 04.06.1997
(51) Int. Cl.: B60G 7/02, B62D 21/11

(54) **Hilfsrahmen für ein Kraftfahrzeug**
Subframe for a motor vehicle
Châssis auxiliaire pour véhicule automobile

(30) Priorität: 21.06.1996 DE 19624853
(43) Veröffentlichungstag der Anmeldung: 07.01.1998
(73) Patentinhaber: Volkswagen Aktiengesellschaft, 38436 Wolfsburg (DE)
(72) Erfinder: Marquardt, Ralf, Dipl.-Ing., 38446 Wolfsburg (DE); Teuber, Wolfgang, Dipl.-Ing., 38110 Braunschweig (DE); Dau, Wolfram, D-38444 Wolfsburg (DE); Engel, Michael Dipl.-Ing., D-38518 Gifhorn (DE); Lange, Wolfgang Dipl.-Ing., D-38448 Wolfsburg (DE)

(56) Entgegenhaltungen:
- EP-A- 0 764 571
- WO-A-90/05083
- DE-A- 4 019 796
- DE-C- 3 801 640
- FR-A- 2 201 196

## Beschreibung

Die Erfindung bezieht sich auf einen Hilfsrahmen für ein Kraftfahrzeug gemäß dem Oberbegriff von Anspruch 1.

Hilfsrahmen werden im Kraftfahrzeugbau bei Einzelradaufhängungen verwendet, um die Quersteifigkeit der betreffenden Achse zu erhöhen, eine gute Abstützung der über die Fahrzeugräder eingeleiteten Fahrkräfte und eine gute Abkopplung des Fahrzeugaufbaus gegenüber den Rädern zu erreichen. Der Hilfsrahmen erstreckt sich dabei üblicherweise zwischen den Rädern einer Achse, wobei er an seinen äußeren Endbereichen Haltearme zur gelenkigen Aufnahme der Radführungslenker und Befestigungsarme zur Anbringung des Hilfsrahmens am Fahrzeugaufbau über Gummi-Metall-Lager aufweist.

Da der Hilfsrahmen genau an die Fahrzeugeigenschaften, insbesondere den Radstand und die Masse des Fahrzeugs, angepaßt sein muß, läßt sich ein herkömmlicher Hilfsrahmen, wie er z. B. aus der DE 39 27 987 A1 oder der WO 90/05083 bekannt ist, jeweils nur für einen Fahrzeugtyp verwenden, so daß die im modernen Kraftfahrzeugbau angestrebte Kostensenkung durch Verwendung gleicher, standardisierter Bauteile in großen Stückzahlen für verschiedene Fahrzeugmodelle bisher nicht möglich ist. Weiterhin erlauben die bisher bekannten einstöckigen Hilfsrahmen nicht die Verwendung verschiedener Materialien für die verschiedenen Teile des Hilfsrahmens, so daß ein teilweiser Einsatz von Leichtmetall in Kombination mit Stahl bisher nur schwer möglich ist.

Ein Hilfsrahmen nach dem Oberbegriff von Patentanspruch 1 ist aus der DE 38 01 640 C1 bekannt. Dieser umfaßt unter anderem einen sich in Fahrzeugquerrichtung erstreckenden Träger, an den vorderseitig in Radnähe ein sich im wesentlichen in Längsrichtung erstreckender weiterer Träger angeschlossen ist. Der Längsträger ist gegen den Fahrzeugaufbau abgestützt und dient als Lager für die radführenden Lenker. Zur Einstellung der Spurweite sind zwischen dem Querträger und dem Längsträger verschiedene Kopplungsmöglichkeiten vorgesehen, die durch Schraubverbindungen fixiert werden. Eine mit dem Querträger verbundene Lenkvorrichtung ist in bezug auf die Fahrtrichtung innenliegend des Querträgers angeordnet und weist eine mit einem Radträger verbundene Spurstange auf, die den Längsträger an seinem hinteren Ende durchquert, wozu dieser mit einer Durchgangsöffnung versehen ist. Der Zusammenbau dieses bekannten Hilfsrahmens ist diffizil, da unter anderem die Spurstange durch den Längsträger hindurchgeführt werden muß.

Der Erfindung liegt demgegenüber die Aufgabe zugrunde, einen Hilfsrahmen zu schaffen, der neben einer kostengünstigen Herstellung durch Verwendung standardisierter Teile, die in verschiedenen Kraftfahrzeug-Typen eingesetzt werden können, eine unter Berücksichtigung von umliegenden Fahrzeugkomponenten effiziente Montage erlaubt.

Diese Aufgabe wird durch einen Hilfsrahmen nach Anspruch 1 gelöst. Die weiteren Patentansprüche beschreiben bevorzugte Weiterbildungen des erfindungsgemäßen Hilfsrahmens.

Gemäß Anspruch 1 werden die Seitenteile, an denen die Befestigungsmittel zur Befestigung des Hilfsrahmens am Fahrzeugaufbau und die Haltemittel zum Aufnehmen der Radführungslenker angebracht sind, und das die Seitenteile verbindende Mittelteil als separate Bauteile ausgebildet, die über Verbindungsmittel miteinander verbunden sind. Die mehrteilige Ausbildung des Hilfsrahmens erfordert zwar einen entsprechenden Fertigungsschritt des Zusammenfügens der separaten Bauteile, jedoch sind auch herkömmliche Hilfsrahmen oftmals nur durch Verschweißen einzelner vorgefertigter Teile hergestellt, so daß auch hier ein entsprechender Fertigungsschritt notwendig ist. Die mehrteilige Anordnung ermöglicht eine Modulbauweise, bei der nur die Teile des Hilfsrahmens speziell ausgebildet werden müssen, die für das jeweilige Fahrzeugmodell spezifisch sind. Somit kann ein dem jeweiligen Fahrzeugmodell, insbesondere bezüglich Spurweite und Fahrzeugmasse angepaßtes Mittelteil, das für das jeweilige Fahrzeugmodell speziell hergestellt wird, mit standardisierten Seitenteilen verwendet werden, die für verschiedene Fahrzeugmodelle gleich sind und somit in hohen Stückzahlen hergestellt werden können. Die Verbindungsmittel werden gleichzeitig zur Befestigung des Lenkgetriebes an dem Mittelteil verwendet werden, so daß für die Anbringung des Lenkgetriebes kein zusätzlicher Fertigungsschritt notwendig ist.

Die Verbindung kann auf vorteilhafte Weise über Schraubverbindungen erreicht werden.

Die Verwendung eines Mittelteils und zweier separater Seitenteile erlaubt den Einsatz unterschiedlicher Materialien für das Mittelteil und die Seitenteile.

Die Erfindung wird im folgenden anhand einer Ausführungsform und der beiliegenden Zeichnung näher erläutert.

Die Zeichnung zeigt in
- Figur 1: eine Draufsicht auf einen Teil eines Hilfsrahmens nach der Erfindung,
- Figur 2: eine Hinteransicht des Hilfsrahmens nach Figur 1,
- Figur 3: eine Draufsicht auf eine Fahrwerksanordnung mit einem Hilfsrahmen nach Figur 1 mit einem aufgesetzten Lenkgetriebe und anmontierten Querlenkern, und in
- Figur 4: eine perspektivische Ansicht eines Ausschnitts aus Figur 3.

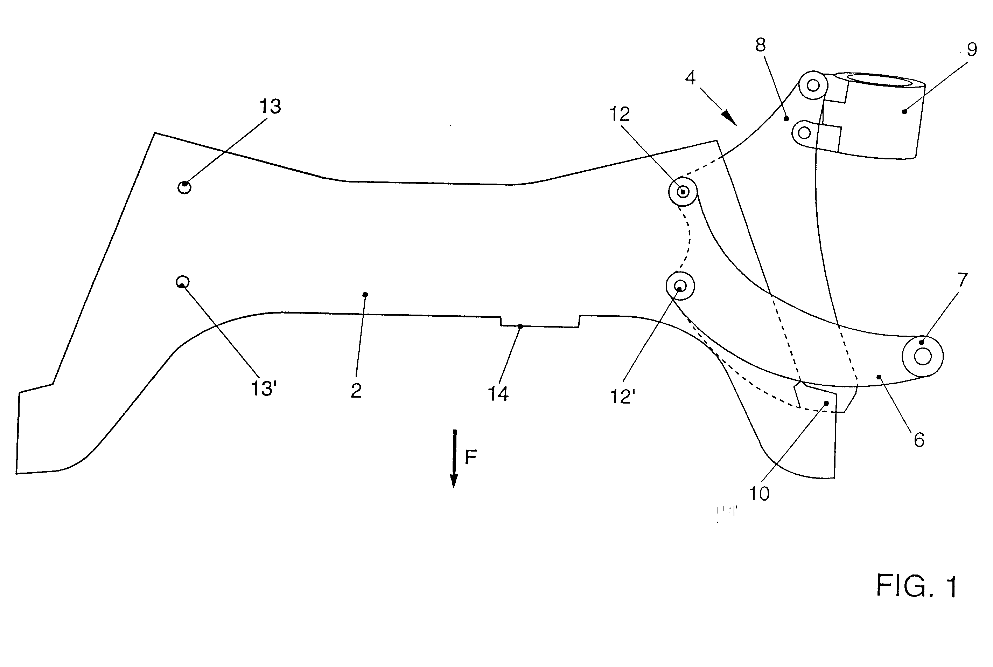

Ein Hilfsrahmen weist ein Mittelteil 2 auf, in dem in den seitlichen Endbereichen Bohrungen vorgesehen sind, in die über Schrauben 12, 12', 13, 13' Konsolen 4 starr befestigt sind. Dabei ist in Figur 1 der Einfachheit halber lediglich die rechte Konsole 4 gezeigt. Die Konsole 4 weist einen Haltearm 8 mit einem bezüglich der Fahrtrichtung F hinteren Querlenkerlagerteil 9 und einem vorderen Querlenkerlagerteil 10 auf, die zur Aufnahme eines der Radführung dienenden Querlenkers 18a bzw. 18b geeignet sind derartig, daß eine Schwenkachse des Querlenkers im wesentlichen parallel zur Fahrtrichtung F verläuft.

Zur Anbringung des Hilfsrahmens am Fahrzeugaufbau weist die Konsole 4 einen Befestigungsarm 6 auf mit einem Lagerteil 7, das einen Teil eines Gummi-Metall-Lagers bildet.

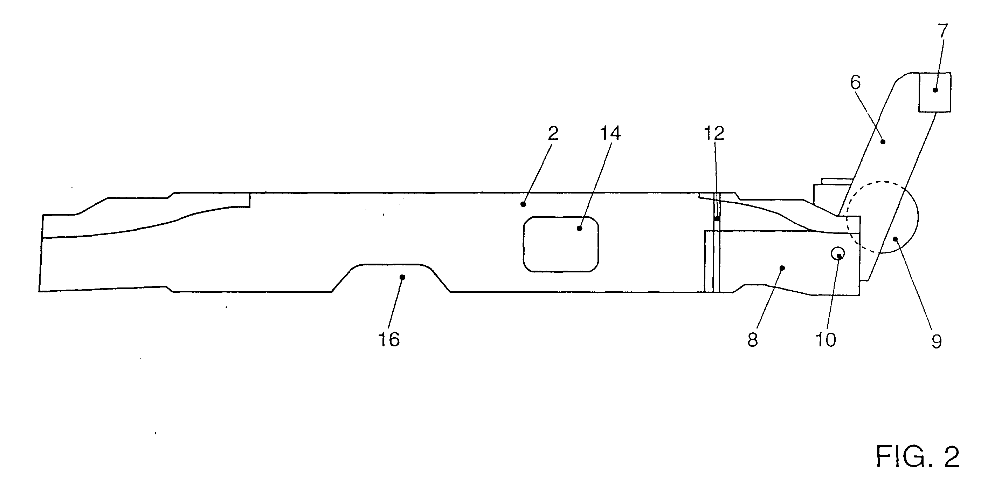

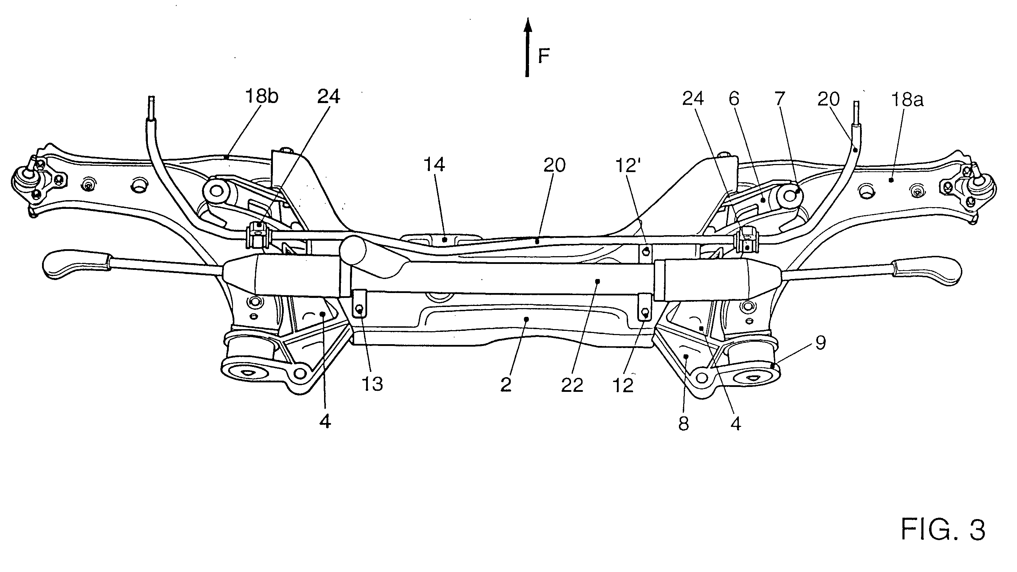

Wie aus Figur 2 und 3 ersichtlich ist, ist der Haltearm 6 gegenüber dem Mittelteil 2 nach oben gezogen, so daß der Mittelteil 2 und die Haltearme 8 entsprechend in Fahrzeug-Hochrichtung von dem Fahrzeugaufbau beabstandet sind.

In dem Mittelteil 2 kann eine Aussparung 14 für eine in Fahrzeuglängsrichtung verlaufende Pendelstütze und einer Ausnehmung 16 für eine Abgasrohrführung ausgearbeitet sein. Auf dem Mittelteil können weiterhin entsprechende Vertiefungen zur Aufnahme z. B. eines Nebenaggregats vorhanden sein.

Das Mittelteil 2 und die Konsolen 4 können einheitlich aus einem Material, z. B. Stahl oder einem Leichtmetall wie z. B. Aluminium oder Magnesium hergestellt sein. Altemativ dazu können das Mittelteil 2 und die Konsole 4 aus verschiedenen Materialien hergestellt sein, z. B. kann der Mittelteil 2 aus Stahl und die Konsolen 4 aus einem Leichtmetall wie z. B. Aluminium oder Magnesium oder einer Aluminium- oder Magnesium-Legierung hergestellt sein.

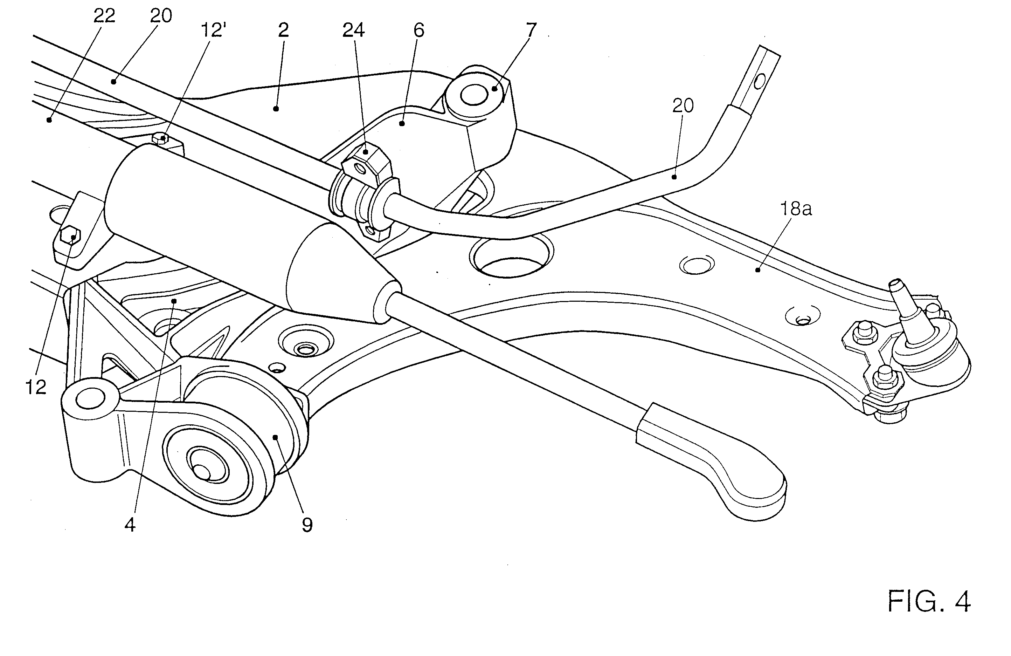

An den Hilfsrahmen kann dabei gemäß Figur 3 und 4 ein Lenkgetriebegehäuse 22 befestigt werden. Die Befestigung des Lenkgetriebegehäuses 22 wird mittels der gleichen Schrauben 12, 12', 13, 13', die zur Verbindung des Mittelteils 2 mit den Seitenteilen 4 dienen, befestigt. Somit wird eine kostengünstige Herstellung ermöglicht, bei der die Konsolen, das Mittelteil und das Lenkgetriebegehäuse in einem Arbeitsschritt durch das Eindrehen von Schrauben 12, 12', 13, 13' zusammengebaut werden können, so daß der Fertigungsaufwand gegenüber einem herkömmlichen Hilfsrahmen, an dem das Lenkgetriebegehäuse ebenfalls befestigt werden muß, nicht erhöht ist durch die Verwendung eines dreiteiligen Hilfsrahmens.

Ein Stabilisator 20 kann von Aufnahmeeinrichtungen 24 der Konsolen 4, die vorzugsweise an den Haltearmen 6 angeordnet sind, aufgenommen werden, so daß das Mittelteil 2 für alle Stabilistoren einheitlich ist.

## Patentansprüche

1. Hilfsrahmen für ein Kraftfahrzeug, mit einem sich in Fahrzeug-Querrichtung erstreckenden Mittelteil (2) und Seitenteilen (4), die Befestigungsmittel (6) zur Befestigung des Hilfsrahmens an einem Fahrzeugaufbau und Haltemittel (8) zur Aufnahme von Radführungslenkem aufweisen, wobei das Mittelteil (2) und die Seitenteile (4) separate Bauteile sind, die über Verbindungsmittel (12, 12', 13, 13') miteinander verbunden sind, und das Mittelteil (2) für die Aufnahme eines Lenkgetriebegehäuses (22) geeignet ist, **dadurch gekennzeichnet, daß** das Lenkgetriebegehäuse (22) an dem Mittelteil (2) mit den gleichen Verbindungsmitteln (12, 12', 13, 13') angebracht ist.

2. Hilfsrahmen nach Anspruch 1, **dadurch gekennzeichnet, daß** das Mittelteil (2) Bohrungen aufweist und die Seitenteile (4) mit dem Mittelteil (2) über in die Bohrungen eingefügte Verbindungsmittel (12, 12', 13, 13') verbunden sind.

3. Hilfsrahmen nach Anspruch 2, **dadurch gekennzeichnet, daß** auch die Seitenteile (4) Bohrungen aufweisen und mit dem Mittelteil (2) über Schrauben verbunden sind.

4. Hilfsrahmen nach einem der Ansprüche 1 bis 3, **dadurch gekennzeichnet, daß** eine Aussparung (14) im Mittelteil (2) vorgesehen ist, zur Aufnahme einer im wesentlichen in Fahrzeug-Längsrichtung verlaufenden Pendelstütze.

5. Hilfsrahmen nach einem der Ansprüche 1 bis 4, **dadurch gekennzeichnet, daß** in dem Mittelteil (2) eine Ausnehmung (16) für eine Abgasrohrführung vorgesehen ist.

6. Hilfsrahmen nach einem der Ansprüche 1 bis 5, **dadurch gekennzeichnet, daß** das Mittelteil (2) eine Vertiefung zur Aufnahme eines Nebenaggregats aufweist.

7. Hilfsrahmen nach einem der Ansprüche 1 bis 6, **dadurch gekennzeichnet, daß** das Mittelteil (2) und die Seitenteile (4) aus verschiedenen Materialien hergestellt sind.

8. Hilfsrahmen nach Anspruch 7, **dadurch gekennzeichnet, daß** das Mittelteil (2) aus Stahl und die Seitenteile (4) aus Leichtmetall, vorzugsweise Aluminium oder Magnesium oder einer Aluminium- oder Magnesium-Legierung hergestellt sind.

9. Fahrwerksanordnung umfassend einen Hilfsrahmen nach einem der Ansprüche 1 bis 8.

## Claims

1. Subframe for a motor vehicle, with a middle part (2) extending in the vehicle transverse direction and with side parts (4) which have fastening means (6) for fastening the subframe to a vehicle body and holding means (8) for the reception of wheel guide links, the middle part (2) and the side parts (4) being separate components which are connected to one another via connection means (12, 12', 13, 13'), and the middle part (2) being suitable for receiving a steering-gear housing (22), **characterized in that** the steering-gear housing (22) is attached to the middle part (2) by the same connection means (12, 12', 13, 13').

2. Subframe according to Claim 1, **characterized in that** the middle part (2) has bores and the side parts (4) are connected to the middle part (2) via connection means (12, 12', 13, 13') inserted into the bores.

3. Subframe according to Claim 2, **characterized in that** the side parts (4) also have bores and are connected to the middle part (2) via screws.

4. Subframe according to one of Claims 1 to 3, **characterized in that** a cutout (14) is provided in the middle part (2) for receiving a rocker-bearing support running essentially in the vehicle longitudinal direction.

5. Subframe according to one of Claims 1 to 4, **characterized in that** a recess (16) for exhaust-pipe routing is provided in the middle part (2).

6. Subframe according to one of Claims 1 to 5, **characterized in that** the middle part (2) has a depression for receiving a secondary assembly.

7. Subframe according to one of Claims 1 to 6, **characterized in that** the middle part (2) and the side parts (4) are produced from different materials.

8. Subframe according to Claim 7, **characterized in that** the middle part (2) is produced from steel and the side parts (4) from light metal, preferably aluminium or magnesium or an aluminium or magnesium alloy.

9. Chassis arrangement, comprising a subframe according to one of Claims 1 to 8.

## Revendications

1. Cadre auxiliaire pour un véhicule automobile, comprenant une partie centrale (2) s'étendant dans la direction transversale du véhicule et des parties latérales (4) qui présentent des moyens de fixation (6) pour la fixation du cadre auxiliaire sur une carrosserie de véhicule et des moyens d'attache (8) pour recevoir des bras de suspension, la partie centrale (2) et les parties latérales (4) étant des éléments séparés qui sont connectés les uns aux autres par le biais de moyens de connexion (12, 12', 13, 13') et la partie centrale (2) étant prévue pour recevoir une boîte de direction (22), **caractérisé en ce que** la boîte de direction (22) est montée sur la partie centrale (2) avec les mêmes moyens de connexion (12, 12', 13, 13').

2. Cadre auxiliaire selon la revendication 1, **caractérisé en ce que** la partie centrale (2) présente des alésages et les parties latérales (4) sont connectées à la partie centrale (2) par le biais de moyens de connexion (12, 12', 13, 13') insérés dans les alésages.

3. Cadre auxiliaire selon la revendication 2,
**caractérisé en ce que** les parties latérales (4) présentent également des alésages et sont connectées à la partie centrale (2) par le biais de vis.

4. Cadre auxiliaire selon l'une quelconque des revendications 1 à 3, **caractérisé en ce qu'**un évidement (14) est prévu dans la partie centrale (2), pour recevoir un support oscillant s'étendant essentiellement dans la direction longitudinale du véhicule.

5. Cadre auxiliaire selon l'une quelconque des revendications 1 à 4, **caractérisé en ce qu'**il est prévu dans la partie centrale (2) un évidement (16) pour un guidage de tuyau d'échappement.

6. Cadre auxiliaire selon l'une quelconque des revendications 1 à 5, **caractérisé en ce que** la partie centrale (2) présente un renfoncement pour recevoir une unité auxiliaire.

7. Cadre auxiliaire selon l'une quelconque des revendications 1 à 6, **caractérisé en ce que** la partie centrale (2) et les parties latérales (4) sont fabriquées à partir de divers matériaux.

8. Cadre auxiliaire selon la revendication 7, **caractérisé en ce que** la partie centrale (2) est fabriquée en acier et les parties latérales (4) sont fabriquées en métal léger, de préférence en aluminium ou en magnésium ou en un alliage d'aluminium ou de magnésium.

9. Agencement de châssis comprenant un cadre auxiliaire selon l'une quelconque des revendications 1 à 8.
